# EUROPEAN PATENT SPECIFICATION

(11) **EP 3 623 776 B1**
(45) Date of publication and mention of the grant of the patent: **02.11.2022**
(21) Application number: 19197300.7
(22) Date of filing: 13.09.2019
(51) Int. Cl.: G01G 23/00, G01G 23/37

(54) **DYNAMIC POWER CONSUMPTION MANAGEMENT AND WAKE-UP METHOD AND APPLICATION SYSTEM THEREFOR**
VERFAHREN ZUR DYNAMISCHEN STROMVERBRAUCHSVERWALTUNG UND ZUM AUFWECKEN UND ANWENDUNGSSYSTEM DAFÜR
GESTION DE LA CONSOMMATION D'ÉNERGIE DYNAMIQUE, PROCÉDÉ DE RÉVEIL ET SON SYSTÈME D'APPLICATION

(30) Priority: 17.09.2018 CN 201811082328
(43) Date of publication of application: 18.03.2020
(73) Proprietor: Mettler Toledo (Changzhou) Measurement Technology Ltd., Jiangsu 213125 (CN); Mettler Toledo (Changzhou) Precision Instrument Ltd., Changzhou, Jiangsu 213022 (CN); Mettler-Toledo International Trading (Shanghai) Co., Shanghai Shanghai (CN)
(72) Inventor: QIAN, Shenjian, 213125 Changzhou, (CN); SHEN, Bo, Changzhou, Jiangsu 213125 (CN); LIU, Jianke, Changzhou, Jiangsu 213125 (CN); YANG, Yong, 213022 Changzhou, Jiangsu (CN)
(74) Representative: Mettler-Toledo

(56) References cited:
- CN-A- 102 419 200
- CN-A- 105 488 989
- DE-U1- 29 919 934
- US-A1- 2010 100 755

## Description

### Technical Field

The present invention relates to a technology for dynamic power consumption self-management and adjustment and, particularly to a dynamic power consumption management and wake-up method and application system therefor.

### Background Art

The current power consumption management for a weighing system mainly achieves the purpose of energy saving by entering a sleep state on the instrument side, while a sensor on a weighing platform does not enter a low power consumption mode, in which case, the system continues to consume a relatively high proportion of power. Therefore, this approach presents significant challenges for a system that needs to operate for a long time by drawing power from a battery. In addition, in a common multi-level sleep design, even if it is in the deepest level of sleep, a CPU is only in a deep sleep state due to the need of wake-up depending on an external operation, so that there is still a significant amount of power consumption. At the same time, devices in a peripheral circuit of the system also consume some power for remaining in a power-on state. These factors lead to an increase in power consumption of the system during sleep and significantly reduces the battery's lifetime. The document US 2010/100755 discloses a dynamic power consumption management and wake-up method according to the state of the art.

### Summary of invention

For those skilled in the art, the objects, features and advantages of the present invention will become apparent from a method of the present invention as summarily described below.

The definitions of few terms used for explaining the present method in the succeeding portions of this specification will be outlined here. A normal operating state is a performance state of a system in which various system components are in a normal power consumption state thereby enabling the system to perform to its full capacity. Light sleep state is a performance state of a system in which the power consumption of the system is less than the power consumption of the system when it is in a normal operating state. A deep sleep state is a performance state of the system in which most or all system components remain unpowered such that the power consumption of the system is less than the power consumption of the system when it is in a light sleep state. A light sleep period is the idle time elapsed between a normal operating state of the system before it enters a light sleep state. A deep sleep period is the idle time elapsed between a normal operating state of the system before it enters a deep sleep state. The light sleep period and the deep sleep period are settings saved in the nonvolatile memory of a processing unit of a weighing system. These two periods can be set during the initialization process of the system. It must be noted that the light sleep period is less than or equal to the deep sleep period. The values of the two periods can be set based on expediency and application requirements.

An object of the present invention is to significantly improve the lifetime of a battery of a system while maintaining the capacity of the battery constant thereby overcoming the shortcomings of the existing power consumption management solutions that still consume power even when the system is in a sleep mode. It is also another object of this invention to provide a dynamic power consumption management and system wake-up method by using a design involving a combination of hardware and software. In order to achieve the above-mentioned objects, the present invention provides a dynamic power consumption management and wake-up method, which is applied to a system consisting of a wireless weighing platform. The present method comprises a plurality of steps, which when taken individually or together contributes in managing the power consumption dynamically besides waking up the wireless weighing platform in response to an effective input condition. Accordingly, a first step of initialization, comprises setting a light sleep period and a deep sleep period. A second step of entering a normal operating state, and starting light sleep timing. In a third step, if no weighing operation is detected and the light sleep period has not expired, continuing to detect the weighing operation; and if no weighing operation is detected and the light sleep period has expired, the wireless weighing platform entering a light sleep state, turning off a communication function of the wireless weighing platform, and starting timing for the deep sleep period. In a fourth step, if no weighing operation is detected and the deep sleep period has expired, the wireless weighing platform entering a deep sleep state, and turning off power supply except for an acceleration sensor; and while the wireless weighing platform remains in the deep sleep state, in a fifth step, in which the acceleration sensor upon detecting an effective vibration, starts the normal operating state of the wireless weighing platform.

Preferably, the third and the fourth steps further comprise resetting the timing for the light sleep period, and returning to the second step when the weighing operation is detected.

In the preferred method, before the wireless weighing platform enters the deep sleep state, the fourth step further comprises: setting a vibration detection parameter range for the acceleration sensor; and the fifth step further comprises: the acceleration sensor determining whether the detected vibration exceeds the vibration detection parameter range, and if true, the vibration is considered an effective vibration, else, the vibration is considered an ineffective vibration.

Preferably, the present invention further provides a dynamic power consumption management and wake-up method, characterized in that the light sleep period and the deep sleep period are set according to a frequency of actual weighing operations.

The present invention further provides an application system containing the dynamic power consumption management and wake-up methods. The application system comprises: a weighing sensor for sensing and obtaining a weighing parameter; a wireless module for transmitting the weighing parameter, the wireless module configured to enter the light sleep state and the deep sleep state; and a weighing platform mainboard comprising: a CPU for receiving and processing the weighing parameter provided by the weighing sensor, and providing the weighing parameter to the wireless module for transmission; an acceleration sensor for sensing and obtaining a vibration parameter while the wireless weighing platform remains in the deep sleep state, and when the acceleration sensor detects the effective vibration, starting the normal operating state of the wireless weighing platform; and a control module for controlling operating states of the CPU, the weighing sensor, and the wireless module based on the light sleep state and the deep sleep state.

Preferably, during the light sleep state of the wireless weighing platform, the CPU turns off the wireless module via a system power control module, and during the deep sleep state of the wireless weighing platform, the acceleration sensor functions independent of the CPU to detect the vibration. Preferably, the control module further comprises a switch circuit electrically connected to a power supply unit; and a system power control module electrically connected to the switch circuit to control powering of the wireless module, the weighing sensor and the CPU.

Preferably, the system further comprises an A/D module, which is arranged between the weighing sensor and the CPU and controlled by the system power control module, for converting and transmitting the weighing parameter to the CPU.

Preferably, the present invention further provides an application system, characterized in that the acceleration sensor starting the normal operating state of the wireless weighing platform comprises: sending a control signal to the control module, wherein the control signal connects the power supply unit to the system power control module via the switch circuit to supply power for the weighing platform mainboard, the weighing sensor and the wireless module.

The present invention reduces the power consumption of the entire system significantly. In view of the shortcomings in the existing prior art power consumption management solutions, an idea of using hierarchical power consumption management is proposed, which adopts an approach where after entering the deep sleep state, the system power is cut off, and the whole system is woken up only by means of an independently operating acceleration sensor detecting a vibration, thereby achieving the effects of extremely low power consumption and optimal energy saving. This method has a general applicability and can be realized on all systems irrespective of their power rating, thus fulfilling the objective of reducing power consumption significantly.

### Brief description of drawings

Embodiments of the present disclosure will now be described in detail with reference to the accompanying drawings. Reference will now be made in detail to preferred embodiments of the present disclosure, examples of which are illustrated in the accompanying drawings. The same reference numerals used in all the figures denote identical or similar parts wherever possible. Furthermore, although the terms used in the present disclosure are selected from well-known common terms, some of the terms mentioned in the description of the present disclosure may have been selected by the applicant according to his or her judgement, and the detailed meaning thereof is described in the relevant section described herein. Furthermore, the present disclosure must be understood, not simply by the actual terms used but also by the meanings encompassed by each term.

For those skilled in the art, the above and other objects, features and advantages of the present invention will become apparent from a detailed description of the present invention as described below with reference to the accompanying drawings.
- Fig. 1: is a component block diagram of an application system for a dynamic power consumption management and wake-up method of the present invention;
- Fig. 2: is a flow chart of a dynamic power consumption management and wake-up method applied in the system of Fig. 1.

### Description of embodiments

This description discloses one or more embodiments in combination with features of the present invention. The disclosed embodiments are merely illustrative of the present invention. The scope of the present invention is not limited to the disclosed embodiments. The present invention is defined by the appended claims.

The "one embodiment", "an embodiment", and "an exemplary embodiment", etc., referred in the description indicates that the described embodiment may comprise special features, structures or characteristics, however, all the embodiments do not necessarily contain such special features, structures, or characteristics. Furthermore, these phrases do not need to involve the same embodiments. Furthermore, when describing special features, mechanisms, or characteristics in combination with an embodiment, it is considered that the implementation of such features, mechanisms, or characteristics in combination with other embodiments (whether explicitly described or not) is well within the knowledge scope of those skilled in the art.

Furthermore, it should be understood that the space descriptions used herein (e.g., over, under, above, left, right, below, top, bottom, vertical, horizontal, etc.) are for illustrative purposes only, and the actual implementation of the structures described herein can be spatially arranged in any orientation or manner.

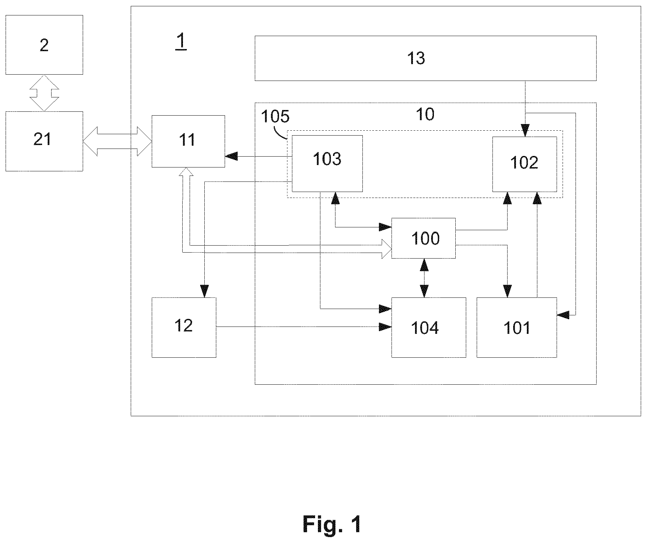

With reference to Fig. 1, the application system for the dynamic power consumption management and wake-up method of the present invention consists of two parts, namely, a wireless weighing platform 1 and an instrument 2. The wireless weighing platform 1 comprises four components i.e., the weighing platform mainboard 10, the slave wireless module 11, the weighing sensor 12 and the power supply unit 13, wherein the slave wireless module 11, the weighing sensor 12 and the power supply unit 13 are known.

The power supply unit 13 can be powered via a battery or an external 220V power supply.

The improvements of the weighing system of the present invention in terms of the hardware structure lie in that: the slave wireless module 11 is located inside the wireless weighing platform 1, but is placed external to the weighing platform mainboard 10, and is connected to the weighing platform mainboard 10 via a serial communication interface, that is in communication with a CPU 100 in the weighing platform mainboard 10. Furthermore, the master wireless module 21 is externally located on one end of the instrument 2, and is connected to the instrument 2 via the serial communication interface. The slave wireless module 11 in the above wireless weighing platform 1 and the master wireless module 21 in the instrument 2 communicate with each other by means of a low power consuming near field communication technology such as Bluetooth for data transmission.

The weighing platform mainboard 10 comprises a CPU 100, a system power control module 103 and an A/D module 104. The weighing platform mainboard 10 further comprises a control module 105 for controlling operating states of the CPU 100, the weighing sensor 12, and the slave wireless module 11 based on the light sleep state and the deep sleep state of the system. It must be noted that the switch circuit 102 and the system power control module 103 are part of the control module (105). Another important improvement of the present invention lies in that an acceleration sensor 101 and a switch circuit 102 are further arranged in the mainboard 10.

It is further understood that the power supply unit 13 supplies power to the switch circuit 102, wherein the switch circuit 102 performs switch control for the control of operating power of the system power control module 103. In other words, the switch circuit 102 controls the system power control module 103 to supply power to the slave wireless module 11, the weighing sensor 12, the CPU 100, and the A/D module 104, etc. The CPU 100 controls the acceleration sensor 101 and the switch circuit 102. The switch circuit 102 can also be controlled by the acceleration sensor 101. It is required that the acceleration sensor 101 is not controlled by the switch circuit 102 and rather it is directly powered by the power supply unit 13.

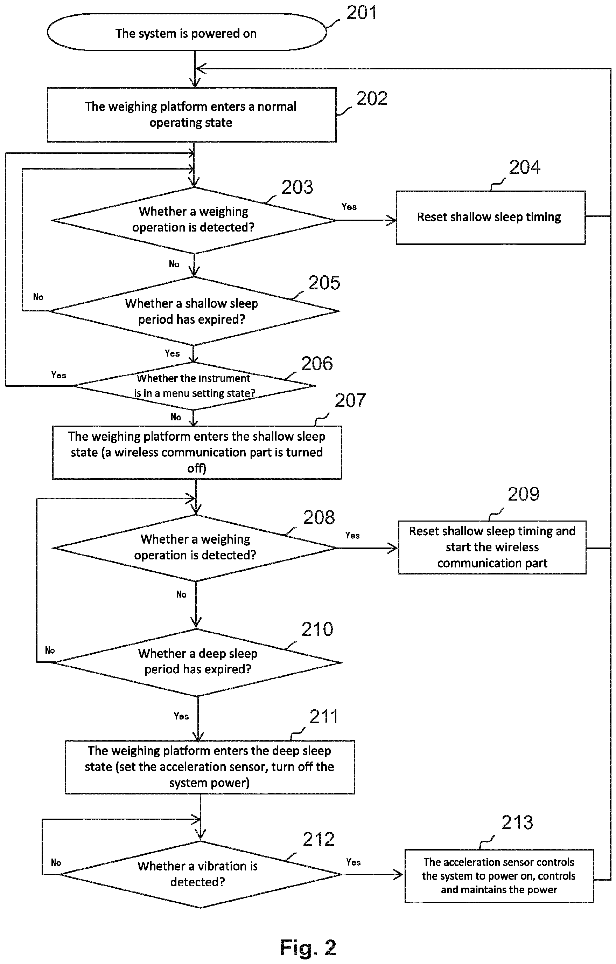

An operating process of the dynamic power consumption management and wake-up method of the present invention is introduced in conjunction with an operating flow chart shown in Fig. 2 as follows:

In step 201, the system is powered on and initialized, and after being powered on, the system enters a normal operating state, and various system components are in a normal power consumption state of full speed operation.

The initialization process comprises arranging, by the CPU 100, the system to enter a light sleep period and a deep sleep period based on the frequency with which the weighing operations are performed. For example, if the user performs a weighing operation once every 5 minutes and works 8 hours a day, with the light sleep period set as 2 minutes and the deep sleep period set as 30 minutes. In the foregoing example, the light sleep period constitutes about 60% of the normal operating time of the weighing system, and in case no weighing operation is performed for a long time, which is the case during off hours, the wireless weighing platform 1 enters the deep sleep state, in which state the energy is saved significantly.

After initialization, the slave wireless module 11, the weighing sensor 12 and the weighing platform mainboard 10 of the wireless weighing platform 1 are all in an operating state.

In step 202, the wireless weighing platform 1 enters the normal operating state, and the light sleep timer starts timing.

In step 203, it is determined whether a weighing operation is detected.

Specifically, the CPU 100 determines whether a weighing operation has occurred by detecting changes in an output signal of the weighing sensor 12 arranged on the wireless weighing platform 1 output through the A/D module 104, and if so, the process turns to step 204; and if not, the process jumps to step 205.

In step 204, if a weighing operation is detected, no sleep operation is performed and the light sleep timing is reset i.e. the light sleep timer is set to zero, and then the process returns to step 202.

In step 205, if step 203 detects no weighing operation, the process continues with the light sleep timing, and if the light sleep timing does not reach a predetermined value, the process returns to step 203 to continuously repeat the detection of a weighing operation.

In step 206, if the wireless weighing platform 1 performs no weighing operation in step 203, and the light sleep timing reaches the determined value, for example, reaches 2 minutes as specified in the foregoing example, then it is determined whether instrument 2 is in a menu setting state, and if true, the wireless weighing platform 1 does not enter the light sleep state, and therefore the process turns to step 203; else, the process moves to step 207.

In step 207, on the premise that the light sleep period has expired and the instrument 2 is not in the menu setting state, the wireless weighing platform 1 enters the light sleep state.

Referring to Fig. 1, in the context of step 207, the CPU 100 on the weighing platform mainboard 10 does not detect changes in a signal transmitted via the A/D module 104 by the weighing sensor 12 in the wireless weighing platform 1, and the CPU 100 issues to the switch circuit 102 an instruction by which the switch circuit 102 turns off the power supply to the slave wireless module 11, via the system power control module 103, and then turns off the wireless communication function of the slave wireless module 11; and in addition, the CPU 100 also starts the deep sleep timer to start timing at this time. In the light sleep state, the slave wireless module 11 of the weighing platform 1 is turned off, the communication with the instrument 2 is interrupted, but other modules of the weighing platform mainboard 10, including the CPU 100, the acceleration sensor 101, the switch circuit 102, the system power control module 103, and the A/D module 104 continues to operate.

In step 208, the CPU 100 continues to determine whether there is a weighing operation by detecting changes in the output signal for weighing by the weighing sensor 12 output via the A/D module 104.

In step 209, if in step 208 the CPU 100 on the weighing platform mainboard 10 detects changes in a weight signal of the weighing sensor 12 via the A/D module 104 indicating that the weighing operation is detected, then the system power control module 103 starts the power supply for the slave wireless module 11. Simultaneously, the wireless weighing platform 1 quickly re-establishes communication with instrument 2 and uploads related weighing data to instrument 2 via the slave wireless module 11, and at the same time, resets the light sleep timing i.e. sets the light sleep timer to zero, and then returns to the normal operating state of step 202.

In step 210, if no weighing operation is detected in step 208, it is further determined whether the deep sleep time is reached, in other words, it is determined whether the deep sleep period that starts timing in step 207 is reached, if not, the process returns to step 208 and continues to determine whether the wireless weighing platform 1 performs a weighing operation; and if so, the process enters the next step.

In step 211, when the deep sleep period has expired, particularly, when no weighing operation is detected and the deep sleep period of 30 minutes, as specified in the foregoing example, has expired, the system enters a deep sleep state.

In the deep sleep state, the CPU 100 on the weighing platform mainboard 10 controls via the switch circuit 102 the system power control module 103 to cut off the power supply to various modules, except for the acceleration sensor 101, including the CPU 100, the switch circuit 102, the system power control module 103, and the A/D module 104, and at this time, the power consumption of the entire system is limited to only that, which is supplied to the acceleration sensor 101.

It can be understood from the foregoing process steps that the wireless weighing platform 1 will directly enter the deep sleep state when the conditions of the light sleep state, no weighing operation, and a duration reaching the deep sleep period are fulfilled. In the process of entering the deep sleep state, the mainboard CPU 100 of the wireless weighing platform 1 first initializes the acceleration sensor 101 on the mainboard 10 and sets the vibration detection parameter, and then turns off power supply for the weighing platform mainboard 10 itself and for the weighing sensor 12 by using the switch circuit 102. In this way, in the entire system, only the acceleration sensor 101 operates independently with the power supply of the power supply unit 13 while the other modules including the CPU 100, the switch circuit 102, the system power control module 103, and the A/D circuit 104, and the slave wireless module 11 and the weighing sensor 12 are all in a power-off state, and the operating current of the entire system is significantly reduced from a few hundred milliamps to a microampere level, thereby reducing the power consumption of the system significantly.

In this state, the system is almost in a shut-down state, and the acceleration sensor 101 is in a low power consumption operating state. In the above steps, the CPU 100 sets a vibration detection parameter for the acceleration sensor 101 before turning off the system power, and the process is specifically as follows: the CPU 100 writes the vibration detection parameter into the acceleration sensor 101 before turning off the system power control module 103 via the switch circuit 102, and determines whether the received vibration exceeds the range of the parameter when the acceleration sensor 101 operates independently. When the received vibration exceeds the set range of the parameter, the system determines whether the vibration is an effective vibration. Else, the system determines that the detected vibration is an ineffective vibration i.e. a slight vibration which does not serve as a normal effective weighing vibration. The output signal of the acceleration sensor 101 is connected to the switch circuit 102. After an effective vibration is detected by the acceleration sensor 101, the output signal controls the switch circuit 102 to access the power from the power supply unit 13, and starts other modules in the weighing platform mainboard 10 via the system power control module 103.

In step 212, while the wireless weighing platform 1 continues to remain in deep sleep state, the acceleration sensor 101 seeks to detect any incoming vibrations. Until an effective vibration is detected, the process continues to return to step 212, and performs cyclical detections, and once an effective vibration is detected, the process turns to step 213.

In step 213, once the acceleration sensor 101 detects an effective vibration, the acceleration sensor 101 outputs a control signal to the control module 105 and more specifically to the switch circuit 102, thereby directly turns on the system power. Alternatively, when the weighing system is in the deep sleep state, and if a weighing operation occurs, in which an operator puts a weight on the weighing platform 1 causing vibration in the weighing platform 1, the acceleration sensor 101 detects the vibration and sends a control signal, wherein the control signal turns on, via the switch circuit 102, the power from the power supply unit 13 to the system power control module 103, so as to supply power to the weighing platform mainboard 10, the weighing sensor 12 and the slave wireless module 11.

It can be understood from the above entire process that the dynamic power consumption management and wake-up method of the present invention is controlled by the switch circuit 102 of the control module 105 from two aspects: on the one hand, in a light sleep state, the CPU 100 controls the switch circuit 102 to control the turning on and off of the system power control module 103; and on the other hand, in the deep sleep state of the system, the switch circuit 102 is directly controlled by the output signal of the acceleration sensor 101. In the former aspect, after being powered on for operation, the CPU 100 of the weighing platform mainboard 10 controls the switch unit 102 via software, maintains the power supply unit 13 to supply power to the system power control module 103 via the switch circuit 102, and then the module 103 supplies power to other modules of the weighing platform mainboard 10i.e. the weighing sensor 12 and the slave wireless module 11.

At the same time, the CPU 100 instructs the acceleration sensor 101 to revoke the control of the switch circuit 102 in the deep sleep state to allow the system to control the self-turn-off the next time when it is ready to enter the deep sleep state. After powering on, the system re-enters the normal operating state.

The above-mentioned power consumption management approach implemented with a combination of hardware and software can thoroughly control the power consumption of the whole system and keep it at a very low level during deep sleep in comparison to a prior art implementation of mainly controlling the operating state of the CPU, which ignores the power consumption of other parts of the system. In the process of wake up, the characteristics of the system operation are skilfully utilized, and the system is directly woken up by the vibration resulting from the weighing operation without adding further operating steps. The switch circuit 102 of the control module 105 therein is a critical part. This circuit can be controlled by the system CPU to realize the function of turning off the power supply for the system itself, or can also be directly controlled by the output signal of the acceleration sensor 101 for powering on the system. The acceleration sensor 101 is directly powered by the power supply unit 13, and can independently operate to detect vibration when the system power is turned off. A data line of the acceleration sensor 101 is connected to the CPU 100, and once the system is powered on, the CPU 100 quickly controls the switch circuit 102 to maintain the power and resets the output signal of the acceleration sensor 101, and the system enters the next cycle from normal operation to sleep.

In summary, the present invention employs a hardware/software co-design to reduce the power consumption of the entire system significantly. In view of the shortcomings of the existing system power consumption management solutions, an idea of using hierarchical power consumption management is proposed, which adopts an approach where after entering the deep sleep state, the system power is cut off, the weighing platform mainboard 10, the slave wireless module 11 and the weighing sensor 12 all stop operating, and the whole system is woken up only by means of an independently operating acceleration sensor 101 that detects a vibration, so as to achieve the effects of extremely low power consumption and optimal energy saving. This method has a general applicability and can be realized on all systems irrespective of their power rating, thus fulfilling the objective of reducing the power consumption significantly.

According to the above technical solutions of the present invention, the lifetime of the battery of the system is greatly improved without changing the existing system structure and the weighing sensor parameters (still using a commonly used sensor having 350-ohm impedance instead of a high resistance sensor), and calculated according to the normal daily operating hours of 8 hours a day, the lifetime of the battery of the new solution is increased to 20 times of that of the original solution. In the original solution, the battery can be used for 20 days, while in the new solution, the battery can be used for more than 400 days.

### Reference signs list

- 1: wireless weighing platform
- 2: instrument
- 10: weighing platform mainboard
- 11: slave wireless module
- 12: weighing sensor
- 13: power supply unit
- 21: master wireless module
- 100: CPU
- 101: acceleration sensor
- 102: switch circuit
- 103: system power control module
- 104: A/D module
- 105: control module

## Claims

1. A dynamic power consumption management and wake-up method, which is applied to a system consisting of a wireless weighing platform (1), said method comprising a first step of initialization comprising setting a light sleep period and a deep sleep period; a second step of entering a normal operating state, and starting light sleep timing; a third step in which if no weighing operation is detected and the light sleep period has not expired, continuing to detect the weighing operation; and if no weighing operation is detected and the light sleep period has expired, the wireless weighing platform (1) entering a light sleep state, turning off a communication function of the wireless weighing platform (1), and starting timing for the deep sleep period; a fourth step in which if no weighing operation is detected and the deep sleep period has expired, the wireless weighing platform (1) entering a deep sleep state, in which power supply is turned off except for an acceleration sensor (101); and while the wireless weighing platform (1) remains in the deep sleep state, a fifth step in which the acceleration sensor (101) upon detecting an effective vibration, starts the normal operating state of the wireless weighing platform (1).

2. The dynamic power consumption management and wake-up method according to claim 1, **characterized in that** the third step and the fourth step further comprise resetting the timing for the light sleep period, and returning to the second step when the weighing operation is detected.

3. The dynamic power consumption management and wake-up method according to claim 2, **characterized in that** before the wireless weighing platform (1) enters the deep sleep state, the fourth step further comprises setting a vibration detection parameter range for the acceleration sensor (101); and the fifth step further comprises: the acceleration sensor (101) determining whether the detected vibration exceeds the vibration detection parameter range, and if true, the vibration is considered an effective vibration, else, the vibration is considered an ineffective vibration.

4. The dynamic power consumption management and wake-up method according to claim 3, **characterized in that** the light sleep period and the deep sleep period are set according to a frequency of actual weighing operations.

5. An application system to which the dynamic power consumption management and wake-up method according to any one of claims 1 to 4 is applied,
the application system consisting of a wireless weighing platform (1) and an instrument (2)
wherein the wireless weighing system comprises a weighing sensor (12) for sensing and obtaining a weighing parameter;
a slave wireless module (11) for transmitting the weighing parameter to a master wireless module (21) in the instrument (2),
a power supply unit and
a weighing platform mainboard (10) comprising
a CPU (100) configured to receive and process the weighing parameter provided by the weighing sensor (12) and to provide the weighing parameter to the slave wireless module (11) for transmission;
an acceleration sensor (101) for sensing and obtaining a vibration parameter while the wireless weighing platform (1) remains in the deep sleep state, and
a control module (105) for controlling operating states of the CPU (100), the weighing sensor (12), and the slave wireless module (11)
wherein the CPU is configured to perform
the first step of initialization comprising setting a light sleep period and a deep sleep period;
the second step of entering a normal operating state, and starting light sleep timing;
the third step in which if no weighing operation is detected and the light sleep period has not expired, continuing to detect the weighing operation; and if no weighing operation is detected and the light sleep period has expired, the wireless weighing platform (1) entering a light sleep state, turning off the slave wireless module (11) of the wireless weighing platform (1), and starting timing for the deep sleep period;
a fourth step in which if no weighing operation is detected and the deep sleep period has expired, the wireless weighing platform (1) entering a deep sleep state, in which power supply is turned off except for an acceleration sensor (101); and while the wireless weighing platform (1) remains in the deep sleep state,
and wherein said acceleration sensor (101) is configured to start the normal operating state of the wireless weighing platform (1) upon detects an effective vibration.

6. The application system according to claim 6, **characterized in that** the control module (105) comprises a switch circuit (102) electrically connected to a power supply unit (13) and the system power control module (103) electrically connected to the switch circuit (102) to control powering of the slave wireless module (11), the weighing sensor (12) and the CPU (100).

7. The application system according to claim 7, **characterized in that** the system further comprises an A/D module (104), which is arranged between the weighing sensor (12) and the CPU (100) and controlled by the system power control module (103), for converting and transmitting the weighing parameter to the CPU (100).

8. The application system according to claims 5-7, **characterized in that** during the light sleep state of the wireless weighing platform (1), the CPU (100) turns off the slave wireless module (11) via a system power control module (103), and during the deep sleep state of the wireless weighing platform (1), the CPU (100), the switch circuit (102), the system power control module (103), and the A/D circuit (104), and the slave wireless module (11) and the weighing sensor (12) are all in a power-off state, and the acceleration sensor (101) operates independently with power supply of the power supply unit (13) to detect the vibration.

9. The application system according to claim 8, **characterized in that** the acceleration sensor (101) starting the normal operating state of the wireless weighing platform (1) comprises: sending a control signal to the control module (105), wherein the control signal connects the power supply unit (13) to the system power control module (103) via the switch circuit (102) to supply power for the weighing platform mainboard (10), the weighing sensor (12) and the slave wireless module (11).

## Patentansprüche

1. Verfahren zur dynamischen Stromverbrauchsverwaltung und zum Aufwecken, das auf ein System angewandt wird, das aus einer drahtlosen Wiegeplattform (1) besteht, wobei das Verfahren einen ersten Initialisierungsschritt umfasst, der das Einstellen einer Leichtschlafperiode und einer Tiefschlafperiode umfasst; einen zweiten Schritt des Eintretens in einen normalen Betriebszustand und des Beginnens der Leichtschlafzeitzählung; einen dritten Schritt, in dem, falls kein Wiegevorgang erfasst wird und die Leichtschlafperiode nicht abgelaufen ist, das Erfassen des Wiegevorgangs fortgesetzt wird; und falls kein Wiegevorgang erfasst wird und die Leichtschlafperiode abgelaufen ist, die drahtlose Wiegeplattform (1) in einen Leichtschlafzustand eintritt, eine Kommunikationsfunktion der drahtlosen Wiegeplattform (1) ausgeschaltet wird und die Zeitzählung für die Tiefschlafperiode begonnen wird; einen vierten Schritt, in dem, falls kein Wiegevorgang erfasst wird und die Tiefschlafperiode abgelaufen ist, die drahtlose Wiegeplattform (1) in einen Tiefschlafzustand eintritt, in dem die Stromversorgung mit Ausnahme eines Beschleunigungssensors (101) ausgeschaltet ist; und während die drahtlose Wiegeplattform (1) in dem Tiefschlafzustand verbleibt, einen fünften Schritt, in dem der Beschleunigungssensor (101) bei Erfassen einer effektiven Vibration den normalen Betriebszustand der drahtlosen Wiegeplattform (1) beginnt.

2. Verfahren zur dynamischen Stromverbrauchsverwaltung und zum Aufwecken nach Anspruch 1, **dadurch gekennzeichnet, dass** der dritte Schritt und der vierte Schritt ferner das Zurücksetzen der Zeitzählung für die Leichtschlafperiode und das Zurückkehren zu dem zweiten Schritt umfassen, wenn der Wiegevorgang erfasst wird.

3. Verfahren zur dynamischen Stromverbrauchsverwaltung und zum Aufwecken nach Anspruch 2, **dadurch gekennzeichnet, dass,** bevor die drahtlose Wiegeplattform (1) in den Tiefschlafzustand eintritt, der vierte Schritt ferner das Einstellen eines Vibrationserfassungsparameterbereichs für den Beschleunigungssensor (101) umfasst; und der fünfte Schritt ferner Folgendes umfasst: Bestimmen durch den Beschleunigungssensor (101), ob die erfasste Vibration den Vibrationserfassungsparameterbereich überschreitet, und falls dies zutrifft, die Vibration als eine wirksame Vibration betrachtet wird, andernfalls die Vibration als eine unwirksame Vibration betrachtet wird.

4. Verfahren zur dynamischen Stromverbrauchsverwaltung und zum Aufwecken nach Anspruch 3, **dadurch gekennzeichnet, dass** die Leichtschlafperiode und die Tiefschlafperiode gemäß einer Häufigkeit tatsächlicher Wiegevorgänge eingestellt werden.

5. Anwendungssystem, auf das das dynamische Verfahren zur Stromverbrauchsverwaltung und zum Aufwecken nach einem der Ansprüche 1 bis 4 angewandt wird,
wobei das Anwendungssystem aus einer drahtlosen Wiegeplattform (1) und einem Instrument (2) besteht, wobei das drahtlose Wiegesystem einen Wiegesensor (12) zum Erheben und Erhalten eines Wiegeparameters umfasst;
ein drahtloses Slave-Modul (11) zum Übertragen des Wiegeparameters an ein drahtloses Master-Modul (21) in dem Instrument (2),
eine Stromversorgungseinheit und
eine Wiegeplattform-Hauptplatine (10), die Folgendes umfasst
eine CPU (100), die dazu konfiguriert ist, den Wiegeparameter, der von dem Wiegesensor (12) bereitgestellt wird, zu empfangen und zu verarbeiten und den Wiegeparameter dem drahtlosen Slave-Modul (11) zur Übertragung bereitzustellen;
einen Beschleunigungssensor (101) zum Erheben und Erhalten eines Vibrationsparameters, während die drahtlose Wiegeplattform (1) in dem Tiefschlafzustand bleibt, und
ein Steuermodul (105) zum Steuern von Betriebszuständen der CPU (100), des Wiegesensors (12) und des drahtlosen Slave-Moduls (11),
wobei die CPU dazu konfiguriert ist, Folgendes auszuführen
den ersten Initialisierungsschritt, der das Einstellen einer Leichtschlafperiode und einer Tiefschlafperiode umfasst;
den zweiten Schritt des Eintretens in einen normalen Betriebszustand und des Beginnens der Leichtschlafzeitzählung;
den dritten Schritt, in dem, falls kein Wiegevorgang erfasst wird und die Leichtschlafperiode nicht abgelaufen ist, das Erfassen des Wiegevorgangs fortgesetzt wird; und falls kein Wiegevorgang erfasst wird und die Leichtschlafperiode abgelaufen ist, die drahtlose Wiegeplattform (1) in einen Leichtschlafzustand eintritt, das drahtlose Slave-Modul (11) der drahtlosen Wiegeplattform (1) ausgeschaltet wird, und die Zeitzählung für die Tiefschlafperiode begonnen wird; einen vierten Schritt, in dem, falls kein Wiegevorgang erfasst wird und die Tiefschlafperiode abgelaufen ist, die drahtlose Wiegeplattform (1) in einen Tiefschlafzustand eintritt, in dem die Stromversorgung mit Ausnahme eines Beschleunigungssensors (101) ausgeschaltet ist; und während die drahtlose Wiegeplattform (1) in dem Tiefschlafzustand verbleibt,
und wobei der Beschleunigungssensor (101) dazu konfiguriert ist, den normalen Betriebszustand der drahtlosen Wiegeplattform (1) bei Erfassen einer wirksamen Vibration zu beginnen.

6. Anwendungssystem nach Anspruch 6, **dadurch gekennzeichnet, dass** das Steuermodul (105) einen Schalterstromkreis (102) umfasst, der elektrisch mit einer Stromversorgungseinheit (13) verbunden ist, und das Systemstromsteuermodul (103), das elektrisch mit dem Schalterstromkreis (102) verbunden ist, umfasst, um die Stromversorgung des drahtlosen Slave-Moduls (11), des Wiegesensors (12) und der CPU (100) zu steuern.

7. Anwendungssystem nach Anspruch 7, **dadurch gekennzeichnet, dass** das System ferner ein A/D-Modul (104) umfasst, das zwischen dem Wiegesensor (12) und der CPU (100) eingerichtet ist und von dem Systemstromsteuermodul (103) gesteuert wird, um die Wiegeparameter umzuwandeln und an die CPU (100) zu übertragen.

8. Anwendungssystem nach den Ansprüchen 5-7, **dadurch gekennzeichnet, dass** die CPU (100) während des Leichtschlafzustands der drahtlosen Wiegeplattform (1) das drahtlose Slave-Modul (11) über ein Systemstromsteuermodul (103) ausschaltet, und während des Tiefschlafzustands der drahtlosen Wiegeplattform (1), der CPU (100), des Schalterstromkreises (102), des Systemstromsteuermoduls (103) und der A/D-Schaltung (104), und das drahtlose Slave-Modul (11) und der Wiegesensor (12) alle in einem ausgeschalteten Zustand sind, und der Beschleunigungssensor (101) unabhängig mit Stromversorgung der Stromversorgungseinheit (13) arbeitet, um die Vibration zu erfassen.

9. Anwendungssystem nach Anspruch 8, **dadurch gekennzeichnet, dass** der Beschleunigungssensor (101), der den normalen Betriebszustand der drahtlosen Wiegeplattform (1) startet, Folgendes umfasst: Senden eines Steuersignals an das Steuermodul (105), wobei das Steuersignal die Stromversorgungseinheit (13) mit dem Systemleistungssteuermodul (103) über den Schalterstromkreis (102) verbindet, um die Wiegeplattform-Hauptplatine (10), den Wiegesensor (12) und das drahtlose Slave-Modul (11) mit Strom zu versorgen.

## Revendications

1. Procédé de gestion dynamique de la consommation d'énergie et de réveil, qui est appliqué à un système constitué d'une plateforme de pesée sans fil (1), ledit procédé comprenant une première étape d'initialisation comprenant la définition d'une période de veille légère et d'une période de veille profonde ; une deuxième étape d'entrée dans un état de fonctionnement normal et de démarrage d'une temporisation de veille légère ; une troisième étape, dans laquelle si aucune opération de pesée n'est détectée et que la période de veille légère n'a pas expiré, la détection de l'opération de pesée se poursuit ; et si aucune opération de pesée n'est détectée et que la période de veille légère a expiré, la plateforme de pesée sans fil (1) entre dans un état de veille léger, désactive une fonction de communication de la plateforme de pesée sans fil (1) et démarre une temporisation pour la période de veille profonde ; une quatrième étape dans laquelle si aucune opération de pesée n'est détectée et que la période de veille profonde a expiré, la plateforme de pesée sans fil (1) entre dans un état de veille profond, dans lequel l'alimentation électrique est coupée à l'exception d'un capteur d'accélération (101); et tandis que la plateforme de pesée sans fil (1) reste dans l'état de veille profond, une cinquième étape dans laquelle le capteur d'accélération (101), lors de la détection d'une vibration efficace, démarre l'état de fonctionnement normal de la plateforme de pesée sans fil (1).

2. Procédé de gestion dynamique de la consommation d'énergie et de réveil selon la revendication 1, **caractérisé en ce que** la troisième étape et la quatrième étape comprennent en outre la réinitialisation de la temporisation pour la période de veille légère, et le retour à la deuxième étape lorsque l'opération de pesée est détectée.

3. Procédé de gestion dynamique de la consommation d'énergie et de réveil selon la revendication 2, **caractérisé en ce qu'**avant que la plateforme de pesée sans fil (1) n'entre dans l'état de veille profond, la quatrième étape comprend en outre la définition d'une plage de paramètres de détection de vibration pour le capteur d'accélération (101); et la cinquième étape comprend en outre : le fait que le capteur d'accélération (101) détermine si la vibration détectée dépasse la plage de paramètres de détection de vibration, et si oui, la vibration est considérée comme une vibration efficace, sinon, la vibration est considérée comme une vibration inefficace.

4. Procédé de gestion dynamique de la consommation d'énergie et de réveil selon la revendication 3, **caractérisé en ce que** la période de veille légère et la période de veille profonde sont définies en fonction d'une fréquence d'opérations de pesée réelles.

5. Système d'application auquel s'applique le procédé de gestion dynamique de la consommation d'énergie et de réveil selon l'une quelconque des revendications 1 à 4,
le système d'application étant constitué d'une plateforme de pesée sans fil (1) et d'un instrument (2)
dans lequel le système de pesée sans fil comprend un capteur de pesée (12) pour détecter et obtenir un paramètre de pesée ;
un module sans fil esclave (11) pour transmettre le paramètre de pesée à un module sans fil maître (21) dans l'instrument (2),
une unité d'alimentation électrique et
une carte mère de plateforme de pesée (10) comprenant
une CPU (100) configurée pour recevoir et traiter le paramètre de pesée fourni par le capteur de pesée (12) et pour fournir le paramètre de pesée au module sans fil esclave (11) pour transmission ;
un capteur d'accélération (101) pour détecter et obtenir un paramètre de vibration pendant que la plateforme de pesée sans fil (1) reste dans l'état de veille profond, et
un module de commande (105) pour commander les états de fonctionnement de la CPU (100), du capteur de pesée (12) et du module sans fil esclave (11)
dans lequel la CPU est configurée pour exécuter
la première étape d'initialisation comprenant la définition d'une période de veille légère et d'une période de veille profonde ;
la deuxième étape d'entrée dans un état de fonctionnement normal et de démarrage d'une temporisation de veille légère ;
la troisième étape, dans laquelle si aucune opération de pesée n'est détectée et que la période de veille légère n'a pas expiré, la détection de l'opération de pesée se poursuit ; et si aucune opération de pesée n'est détectée et que la période de veille légère a expiré, la plateforme de pesée sans fil (1) entre dans un état de veille léger, désactive le module sans fil esclave (11) de la plateforme de pesée sans fil (1) et démarre la temporisation pour la période de veille profonde ;
une quatrième étape dans laquelle si aucune opération de pesée n'est détectée et que la période de veille profonde a expiré, la plateforme de pesée sans fil (1) entre dans un état de veille profond, dans lequel l'alimentation électrique est coupée à l'exception d'un capteur d'accélération (101); et pendant que la plateforme de pesée sans fil (1) reste dans l'état de veille profond,
et dans lequel ledit capteur d'accélération (101) est configuré pour démarrer l'état de fonctionnement normal de la plateforme de pesée sans fil (1) lors de la détection d'une vibration efficace.

6. Système d'application selon la revendication 6, **caractérisé en ce que** le module de commande (105) comprend un circuit de commutation (102) connecté électriquement à une unité d'alimentation électrique (13) et le module de commande d'alimentation de système (103) étant connecté électriquement au circuit de commutation (102) pour commander l'alimentation du module sans fil esclave (11), du capteur de pesée (12) et de la CPU (100).

7. Système d'application selon la revendication 7, **caractérisé en ce que** le système comprend en outre un module A/D (104), qui est agencé entre le capteur de pesée (12) et la CPU (100) et commandé par le module de commande d'alimentation de système (103), pour convertir et transmettre le paramètre de pesée à la CPU (100).

8. Système d'application selon les revendications 5 à 7, **caractérisé en ce que** pendant l'état de veille léger de la plateforme de pesée sans fil (1), la CPU (100) désactive le module sans fil esclave (11) via un module de commande d'alimentation de système (103), et pendant l'état de veille profond de la plateforme de pesée sans fil (1), la CPU (100), le circuit de commutation (102), le module de commande d'alimentation de système (103) et le circuit A/D (104), et le module sans fil esclave (11) et le capteur de pesée (12) sont tous hors tension, et le capteur d'accélération (101) fonctionne indépendamment grâce à l'alimentation électrique de l'unité d'alimentation électrique (13) pour détecter les vibrations.

9. Système d'application selon la revendication 8, **caractérisé en ce que** le capteur d'accélération (101) démarrant l'état de fonctionnement normal de la plateforme de pesée sans fil (1) comprend : l'envoi d'un signal de commande au module de commande (105), dans lequel le signal de commande connecte l'unité d'alimentation électrique (13) au module de commande d'alimentation de système (103) via le circuit de commutation (102) pour alimenter la carte mère de plateforme de pesée (10), le capteur de pesée (12) et le module sans fil esclave (11).
